# EUROPÄISCHE PATENTANMELDUNG

(11) **EP 0 534 387 A1**
(43) Veröffentlichungstag der Anmeldung: **31.03.1993**
(21) Anmeldenummer: 92116251.7
(22) Anmeldetag: 23.09.1992
(51) Int. Cl.: B02C 19/22, B02C 18/22, B29B 17/00

(54) **Verfahren und Vorrichtung zur Wiederaufbereitung von Altreifen**

(30) Priorität: 23.09.1991 DE 4131587
(71) Anmelder: Klepsch, Christian, A-5201 Seekirchen b. Salzburg (AT)
(72) Erfinder: Klepsch, Christian, A-5201 Seekirchen b. Salzburg (AT)
(74) Vertreter: Kern, Ralf M., Dipl.-Ing.

(57) **Zusammenfassung**

Um innerhalb eines einzigen Verarbeitungsvorganges eine Zerkleinerung von Altreifen bis zu einem feinen Granulat vornehmen zu können, bei welchem eine Auftrennung in Gummi-, Kunststoff- und Eisen- bzw. Stahlbestandteile durchführbar ist, ist im Rahmen der vorliegenden Erfindung vorgesehen, daß die zu verarbeitenden Altreifen zuerst in Radialrichtung aufgeschnitten werden und daß in der Folge diese Altreifen mit ihrem aufgeschnittenen Ende mittels einer Fördereinrichtung flachgedrückt und in dieser flachgedrückten Form senkrecht einer schnell rotierenden Trommelanordnung zugeführt werden, welche entlang ihres Umfangs mit entsprechenden Schneidelementen versehen ist.

## Beschreibung

Die vorliegende Erfindung bezieht sich auf ein Verfahren zur Wiederaufbereitung von Altreifen entsprechend dem Oberbegriff des Anspruchs 1 sowie auf eine Vorrichtung zur Durchführung dieses Verfahrens.

Aufgrund der zunehmenden Motorisierung fallen heutzutage sehr große Mengen von Altreifen an, welche aus sehr hochwertigen Materialien, nämlich Gummi und Stahl bestehen, welche getrennt und in feingranulierter Form sehr gut wiederverwertet werden können. Dabei sei zu erwähnen, daß bei einem neuen Pkw-Reifen moderner Bauweise der Stahlanteil bereits 56 Gew.% beträgt, wobei es sich zeigt, daß gerade diese Stahlbestandteile der Güteklasse SS als Zusatzmaterial bei der Herstellung von Stahllegierungen einen sehr hohen Marktwert besitzen.

Es zeigt sich jedoch, daß die Wiederaufbereitung von Altreifen erhebliche Schwierigkeiten bereitet, weil Gummi nachgiebig ist, während Stahl sehr hohe Schneiddrücke erfordert. In Altreifen vorhandene Nylonfäden haben zudem noch die Eigenschaft, daß sie zum Schmelzen neigen und dabei die Schneidmesser verkleben. Altreifen müssen demzufolge sehr genau in eine Wiederaufbereitungsanlage gefördert werden, wobei die besondere Geometrie der Altreifen zu den vorhandenen Schwierigkeiten noch beiträgt.

In diesem Sinn ist bereits eine Grobschnitzelmaschine zum Zerkleinern von Altreifen bekannt (siehe DE-OS 39 39 439.5), bei welcher auf einer gemeinsamen Welle eine Mehrzahl von Diamantsägeblättern angeordnet sind, mit denen je nach dem gewählten Abstand der Sägeblätter Altreifen in Streifen von 3 bis 5 cm Breite zerschnitten werden können. Diese Streifen bzw. Grobschnitzel müssen jedoch in der Folge weiterverarbeitet werden, um auf diese Weise ein Feingranulat zu bilden, bei welchem die Stahlbestandteile beispielsweise mittels einer Magneteinrichtung von den Gummi- und Kunststoffkomponenten getrennt werden können.

Es ist Aufgabe der vorliegenden Erfindung, ein Verfahren zur Wiederaufbereitung von Altreifen zu schaffen, bei welchem eine Zerkleinerung von Altreifen bis herunter zu einem Feingranulat im wesentlichen innerhalb eines Verfahrensschrittes durchführbar ist, so daß unmittelbar darauf eine Trennung der Gummibestandteile von den Stahlbestandteilen durchgeführt werden kann.

Erfindungsgemäß wird dies durch Vorsehen des im kennzeichnenden Teil des Anspruchs 1 aufgeführten Merkmale erreicht.

Eine Vorrichtung zur Durchführung des erfindungsgemäßen Verfahrens ergibt sich anhand der Unteransprüche 2 bis 15.

Die Erfindung soll nunmehr anhand eines Ausführungsbeispiels näher erläutert und beschrieben werden, wobei auf die beigefügte Zeichnung Bezug genommen ist. Es zeigen:
- Fig. 1: eine perspektivische Ansicht des äußeren Gehäuses einer Vorrichtung zur Wiederaufbereitung von Altreifen gemäß der Erfindung;
- Fig. 2: eine perspektivische Ansicht einer innerhalb des Gehäuses von Figur 1 angeordneten Zerkleinerungsschnecke;
- Fig. 3: eine seitliche Ansicht von einem der Schneidsegmente, welche entlang des äußeren Umfangs der Zerkleinerungsschnecke von Figur 2 befestigt sind;
- Fig. 4: eine seitliche Ansicht der Fördereinrichtung, mit welcher die zu verarbeitenden Altreifen der Zerkleinerungsschnecke zugefügt werden;
- Fig. 5: eine vordere schematische Ansicht der Anordnung von Figur 4 und
- Fig. 6: ein in radialer Richtung aufgeschnittener Altreifen, so wie er in den Einführschacht der Fördereinrichtung von Figur 4 eingeschoben werden kann.

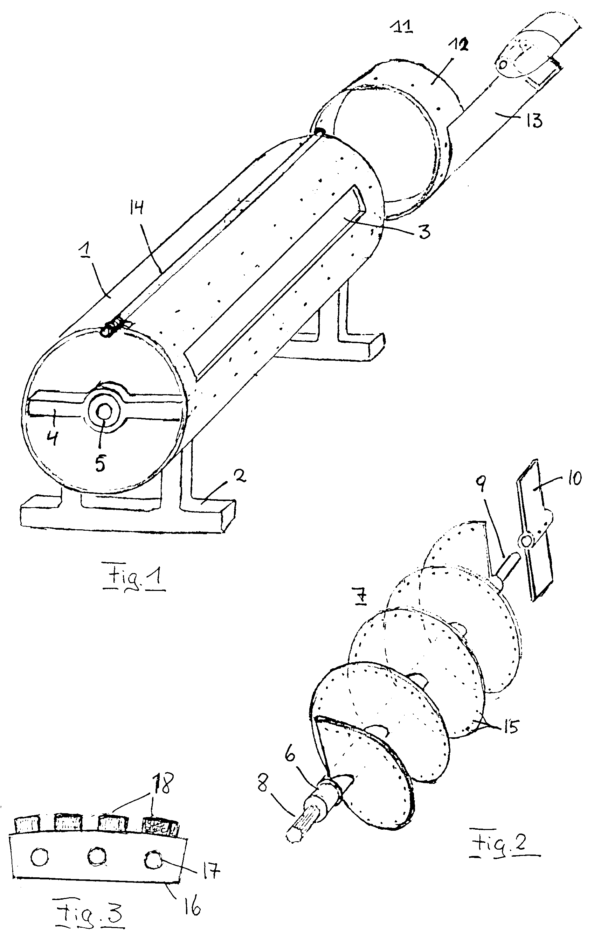

So wie sich dies anhand von Figur 1 ergibt, weist die Vorrichtung zur Wiederaufbereitung von Altreifen ein in etwa zylindrisches Gehäuse 1 auf. Dieses Gehäuse 1 ist nach unten hin mit zwei Füßen 2 versehen, welche ein Aufstellen der Vorrichtung auf einer glatten Bodenfläche sowie einen Transport auf einem kleineren Lastwagen gestatten. Das betreffende zylindrische Gehäuse 1 weist zur Seite hin einen rechteckigen Einführschlitz 3 auf, welcher derart dimensioniert ist, daß durch denselben bis zu drei Pkw-Altreifen nebeneinander einführbar sind.

Im Bereich der beiden Enden des zylindrischen Gehäuses 1 sind Querstäbe 4 eingesetzt, welche in ihrem mittleren Bereich mit Gleit- oder Kugellagern 5 versehen sind. In diesen Lagern 5 ist die Welle 6 einer in Figur 2 dargestellten Zerkleinerungsschnecke 7 eingesetzt, welche bei ihrem Antrieb an dem Einführschlitz 3 vorbeibewegt wird. Die Welle 6 der Förderschnecke 7 trägt an ihrem vorderen Bereich einen Antriebszapfen 8, welcher über eine nicht dargestellte Verbindungswelle, beispielsweise von einem Traktormotor, her angetrieben werden kann.

In ihrem rückwärtigen Bereich weist die Welle 6 der Förderschnecke 7 einen weiteren Zapfen 9 auf, auf welchem ein doppelseitiges flaches Flügelblatt 10 befestigt ist. Dieses Flügelblatt 10 ist Teil einer in Figur 1 dargestellten Auswurfeinrichtung 11, welche im wesentlichen aus einem Gehäuseabschnitt 12 besteht, der mittels Schrauben am rückwärtigen Ende des zylindrischen Gehäuses 1 befestigt werden kann. Dieser Gehäuseabschnitt 12 weist einen tangential nach oben führenden Auswurfschacht 13 auf, durch welchen das erzeugte Feingranulat unter dem Einfluß des rotierenden Flügelblattes 10 nach außen geschleudert wird, so daß eine Trennung in die verschiedenen Bestandteile und/oder eine Abfüllung in Säcke und dergleichen durchführbar ist.

Im oberen Bereich des zylindrischen Gehäuses 1 ist schließlich noch eine Rohrleitung 14 vorgesehen, durch welche Wasser durch nicht dargestellte Sprühdüsen in Richtung der rotierenden Zerkleinerungsschnecke 7 gesprüht werden kann. Auf diese Weise kann eine ausreichende Kühlung der Zerkleinerungsschnecke 7 erreicht werden, wodurch ein ungewünschtes Festkleben sich erwärmender Kunststoffbestandteile der verarbeiteten Altreifen verhindert wird.

Entlang des Umfangs der in Figur 2 dargestellten Zerkleinerungsschnecke 7 sind in regelmäßigen Abständen Gewindebohrungen 15 vorgesehen, mit deren Hilfe unter Einsatz nichtdargestellter selbstklemmender Senkkopfschrauben Schneidsegmente befestigt werden können, von welchen eines in Figur 3 dargestellt ist. Das betreffende Schneidsegment 16 weist zu diesem Zweck entsprechende Bohrungen 17 auf, durch welche die bereits erwähnten selbstklemmenden Senkkopfschrauben hindurchgeführt sind. Entlang seiner äußeren Kante ist das Schneidsegment 16 mit 4 quaderförmigen Schneidzähnen 18 versehen, welche an ihrer Oberfläche mit einer möglichst grobkörnigen Diamant- oder Granulatbeschichtung versehen sind. Die Anordnung ist dabei derart getroffen, daß nach Abnutzung der auf den Schneidzähnen 18 vorgesehenen Diamant- oder Granulatbeschichtung ein relativ rascher Austausch der entlang des Umfangs der Zerkleinerungsschnecke 7 vorgesehenen Schneidsegmente 16 möglich ist, so daß die der Zerkleinerung der Altreifen dienende Vorrichtung mit nur kurzen Stillegungspausen über lange Zeiträume betrieben werden kann.

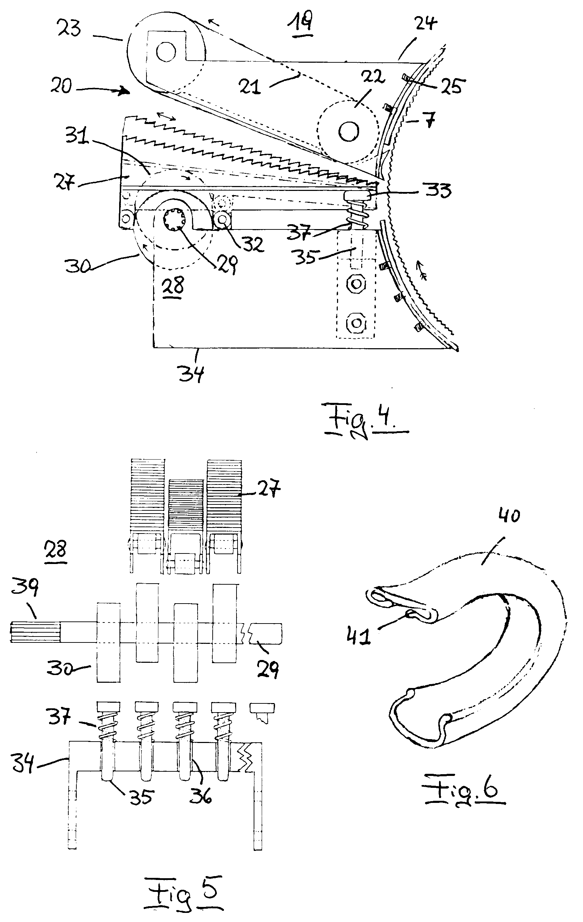

Figur 4 zeigt die Fördereinrichtung 19, mit welcher die zu zerkleinernden Altreifen durch den Einführschlitz 3 der mit den Schneidsegmenten 16 versehenen Zerkleinerungsschnecke 7 zugeführt werden können. Diese Fördereinrichtung 19 besitzt dabei einen Einführschacht 20, welcher sich in Richtung des an dem Gehäuse 1 vorgesehenen Einführschlitzes 3 kontinuierlich verengt. Dieser Einführschacht 20 wird nach oben hin durch ein nicht angetriebenes Endlosband 21 begrenzt. Bei diesem Endlosband handelt es sich um ein Textilband, welches auf seiner Außenseite mit einer Schmiergelbeschichtung versehen ist. Derartige Endlosbänder, so wie sie in der Schleifindustrie verwendet werden, sind dabei ohne weiteres im Handel erhältlich. Im Bereich der beiden Enden des sich verengenden Einführschachtes 20 sind Walzen 22 und 23 vorgesehen, welche in einem oberen Rahmenteil 24 der Fördereinrichtung 19 gelagert sind. Dieser obere Rahmenteil 24 ist mittels Bolzen 25 an dem zylindrischen Gehäuse 1 derart befestigt, daß der sich verengende Einführschacht 20 der Fördereinrichtung 19 unmittelbar auf den in dem Gehäuse 1 vorgesehenen Einführschlitz 3 zuführt. Der obere Rahmenteil 24 bildet zusätzlich noch einen querverlaufenden Steg 26, welcher eine Verlängerung des unteren Trums des Endlosbandes 21 bis hin zu dem Einführschlitz 3 darstellt.

Entsprechend Figuren 4 und 5 wird die untere Fläche des sich verengenden Einführschachtes 20 durch eine Mehrzahl von nebeneinander angeordneten Zackenleisten 27 gebildet, welche sich über die ganze Länge des Einführschachtes 20 erstrecken. Diese Zackenleisten 27 werden mit Hilfe eines Exzenterantriebes 28 derart angetrieben, daß sie nicht nur Auf- und Abbewegungen sondern auch Hin- und Herbewegungen in Richtung des Einführschlitzes 3 des Gehäuses 1 durchführen. Der Exzenterantrieb 28 besteht dabei aus einer Welle 29, auf welcher mehrere kreisförmige Exzenterscheiben 30 in unterschiedlichen Winkellagen befestigt sind. Diese Exzenterscheiben 30 ragen dabei in entsprechende Aussparungen 31 hinein, welche im unteren Bereich der Zackenleisten 27, und zwar im Bereich des Eintrittsendes des Einführschachtes 20 vorgesehen sind. Zur Verringerung der Reibung sind im Bereich der Aussparungen 31 der Zackenleisten 27 zusätzlich jeweils zwei Rollen 32 vorgesehen, welche auf der Außenfläche der Exzenterscheiben 30 zum Abrollen gelangen. Am hinteren Ende des Einführungsschachtes 20 stehen die einzelnen Zackenleisten 27 zusätzlich unter dem Einfluß von Gleitfüßen 33, welche innerhalb eines unteren Rahmenteiles 34 der Fördereinrichtung 19 in vertikaler Richtung verschiebbar gelagert sind. Die betreffenden Gleitfüße 33 weisen zu diesem Zweck jeweils einen nach unten ragenden Schaft 35 auf, welcher in eine entsprechende Bohrung 36 des unteren Rahmenteiles 34 eingesetzt ist. Zwischen dem unteren Rahmenteil 34 mit seinen Bohrungen 36 und den Gleitfüßen 33 sind zusätzlich jeweils um den Schaft 35 herum angeordnete Druckfedern 37 vorgesehen, welche die jeweilige Zackenleiste 27 im Bereich des Endes des Einführungsschachtes 20 in Richtung des gegenüberliegenden Steges 26 drücken. Die Anordnung ist dabei derart getroffen, daß die Druckfedern 37 relativ leicht ausgetauscht werden können, um auf diese Weise eine optimale Anpassung an die Art der zu verarbeitenden Altreifen vornehmen zu können. Der untere Rahmenteil 34 ist mit entsprechenden Bolzen 38 ebenfalls an dem zylindrischen Gehäuse 1 im Bereich des Einführschlitzes 3 befestigt. Die mittels nichtdargestellter Lager in dem unteren Rahmenteil 34 gelagerte Welle 29 ist mit einem Antriebszapfen 39 versehen, von welchem aus der Exzenterantrieb 28 über ein stufenlos einstellbares Getriebe von einem Elektromotor antreibbar ist.

Um im Rahmen der Erfindung Altreifen von Kraftfahrzeugen in der gewünschten Weise zu Feingranulat verarbeiten zu können, müssen dieselben zuerst in radialer Richtung aufgeschnitten werden. Entsprechend Figur 6 können diese in radialer Richtung aufgeschnittenen Altreifen 40 dann relativ leicht an dem einen Ende 41 soweit zusammengedrückt werden, daß eine Einführung in dem durch das Endlosband 21 und die Zackenleisten 27 gebildeten Einführschacht 20 möglich ist, worauf unter dem Einfluß der hin- und herbewegten Zackenleisten 27 ein vollautomatischer Vorschub des jeweiligen Altreifens 40 in Richtung der mit hoher Geschwindigkeit rotierenden Zerkleinerungsschnecke 7 mit den entlang des Umfangs befestigten Schneidsegmenten 16 erfolgt. Durch die sehr kompakte Zusammenpressung der aufgeschnittenen Altreifen 40 innerhalb des Einführschachtes 20 der Fördereinrichtung 19, ferner durch den sehr genauen Zwangsvorschub mit Hilfe des Endlosbandes 21 und der Zackenleisten 27, ferner durch die hohe Rotationsgeschwindigkeit der Zerkleinerungsschnecke 7 in Verbindung mit der vorzugsweise eingesetzten Diamantbeschichtung der Schneidzähne 18 der Schneidsegmente 16 und durch die gleichzeitige Berieselung des durch die Rohrleitung 14 zugeführten Wassers kann demzufolge eine sehr zufriedenstellende Zerkleinerung der Altreifen bis hinunter zu Feingranulat erreicht werden, obwohl gerade die aus Gummi, Stahldrähten und Kunststofffäden bestehende Materialkombination einer derartigen Aufbereitung größere Schwierigkeiten entgegenstellt.

Anstelle der Auswurfeinrichtung 11 mit ihrem zylindrischen Gehäuseabschhitt 12, dem Auswurfschacht 13 und dem doppelseitigen flachen Flügelblatt 10 kann im Rahmen der vorliegenden Erfindung auch eine Trenneinrichtung vorgesehen sein, mit welcher unmittelbar eine Trennung des Gummigranulats, der Kunststoffasern und der Stahl- bzw. Eisenbestandteile vorgenommen werden kann. Diese Trenneinrichtung kann beispielsweise in Form eines vertikalen Schachtes ausgebildet sein, durch welchen von unten her Druckluft zugeführt wird. Die Geschwindigkeit der zugeführten Druckluft muß dabei derart eingestellt werden, daß das leichtere Gummigranulat und die Kunststoffaser nach oben ausgetragen werden, während die Eisen- bzw. Stahlbetandteile aufgrund ihres höheren spezifischen Gewichtes gegen die Luftströmung nach unten fallen.

## Patentansprüche

1. Verfahren zur Wiederaufbereitung von Altreifen, dadurch **gekennzeichnet,** daß die zu verarbeitenden Altreifen zuerst in Radialrichtung aufgeschnitten werden, und daß in der Folge diese Altreifen mit ihrem aufgeschnittenen Ende mittels einer Fördereinrichtung flachgedrückt und in dieser flachgedrückten Form senkrecht einer schnell rotierenden Trommelanordnung zugeführt werden, welche entlang ihres Umfanges mit entsprechenden Schneidelementen versehen ist.

2. Vorrichtung zur Durchführung des Verfahrens nach Anspruch 1, dadurch **gekennzeichnet,** daß die schnellrotierende Trommelanordnung in Form einer Zerkleinerungsschnecke (7) ausgebildet ist.

3. Vorrichtung nach Anspruch 2, dadurch **gekennzeichnet,** daß entlang des Umfangs der Zerkleinerungsschnecke (7) eine Mehrzahl von in regelmäßigen Abständen angeordneten Gewindebohrungen (13) vorgesehen sind, mit deren Hilfe unter Einsatz von selbstklemmenden Senkkopfschrauben auswechselbare Schneidsegmente (16) befestigbar sind.

4. Vorrichtung nach Anspruch 3, dadurch **gekennzeichnet,** daß die Schneidsegmente (16) mehrere, vorzugsweise vier, quaderförmige Schneidzähne (18) aufweisen, welche mit einer grobkörnigen Diamant- oder Granulatbeschichtung versehen sind.

5. Vorrichtung nach einem der Ansprüche 2 bis 4, dadurch **gekennzeichnet,** daß die Zerkleinerungsschnecke (7) innerhalb eines horizontal gelagerten zylindrischen Gehäuses (1) angeordnet ist, welches zur Seite hin mit einem rechteckigen Einführschlitz (3) versehen ist.

6. Vorrichtung nach Anspruch 5, dadurch **gekennzeichnet,** daß an dem zylindrischen Gehäuse (1) im Bereich des Einführschlitzes (3) eine Fördereinrichtung (19) befestigt ist, in welcher eine Mehrzahl von in Förderrichtung angeordneten Zackenleisten (27) hin- und herbewegbar sind.

7. Vorrichtung nach Anspruch 6, dadurch **gekennzeichnet,** daß die Fördereinrichtung (19) im wesentlichen zwei Rahmenteile (24, 34) aufweist, zwischen welchen ein sich verjüngender Einführungsschacht (20) gebildet ist, wobei die untere Fläche dieses Einführungsschachtes (20) durch die hin- und herbewegten Zackenleisten (27) und die obere Fläche durch ein nicht angetriebenes Endlosband (21) gebildet sind.

8. Vorrichtung nach Anspruch 7, dadurch **gekennzeichnet,** daß die Zackenleisten (27) nach unten hin jeweils mit einer halbkreisförmigen Aussparung (31) versehen sind, in welche kreisförmige Exzenterscheiben (30) hineinragen, die auf einer innerhalb des unteren Rahmenteils (34) gelagerten Welle (29) befestigt sind.

9. Vorrichtung nach Anspruch 7 oder 8, dadurch **gekennzeichnet,** daß die Zackenleisten (27) im Bereich des verjüngten Endes des Einführschachtes (20) zusätzlich unter dem Einfluß von federbeaufschlagten Gleitfüßen (33) stehen, welche dieselben in Richtung des Endlosbandes (21) bzw. einem im Endbereich desselben vorgesehenen Quersteg (26) drücken.

10. Vorrichtung nach einem der Ansprüche 2 bis 9, dadurch **gekennzeichnet,** daß im oberen Bereich des zylindrischen Gehäuses (1) eine Rohrleitung (14) mit entsprechenden Einsprühdüsen vorgesehen ist, durch welche feinzerstäubtes Wasser in Richtung der Zerkleinerungsschnecke (7) richtbar ist.

11. Vorrichtung nach einem der Ansprüche 3 bis 10, dadurch **gekennzeichnet,** daß am rückwärtigen Ende der Welle (6) der Zerkleinerungsschnecke (7) ein Zapfen (9) vorgesehen ist, auf welchem ein doppelseitiges flaches Flügelblatt (10) befestigt ist, mit welchem das erzeugte Feingranulat über einen schräg nach oben führenden Auswurfschacht (13) zur Abgabe gelangt.

12. Vorrichtung nach einem der Ansprüche 3 bis 10, dadurch **gekennzeichnet,** daß im Endbereich der Zerkleinerungsschnecke (7) eine vorzugsweise auf Druckluftbasis arbeitende Trenneinrichtung vorgesehen ist, von welcher aus über verschiedene Abgabeschächte das Gummigranulat, die Kunststoffäden und die Eisen- bzw. Stahlbestandteile getrennt abgehbar sind.
